# EUROPÄISCHE PATENTSCHRIFT

(11) **EP 1 400 719 B1**
(45) Veröffentlichungstag und Bekanntmachung des Hinweises auf die Patenterteilung: **21.12.2005**
(21) Anmeldenummer: 02020836.9
(22) Anmeldetag: 18.09.2002
(51) Int. Cl.: F16D 48/06

(54) **Rückkopplungsanordnung für eine Kupplung mit Öltemperatursensor**
Feedback arrangement for a clutch with an oil temperature sensor
Ensemble de rétroaction pour un embrayage avec un capteur de la température de l'huile

(43) Veröffentlichungstag der Anmeldung: 24.03.2004
(73) Patentinhaber: Ford-Werke GmbH, 50735 Köln (DE); Getrag-Ford Transmissions GmbH, 50735 Köln (DE)
(72) Erfinder: Tissot, Andreas, 42897 Remscheid (DE); Kirchhoffer, Johann, 50737 Köln (DE); Geffers, Peter, 50829 Köln (DE); Lukaszewicz, Thomas, 50737 Köln (DE)
(74) Vertreter: Drömer, Hans-Carsten

(56) Entgegenhaltungen:
- EP-A- 1 191 258
- US-A- 5 403 250
- US-A- 6 152 275
- US-A1- 2001 035 323

## Beschreibung

Die Erfindung bezieht sich auf eine Rückkopplungsanordnung für eine Kupplung, insb. für eine Ölbadscheibenkupplung, die insb. für eine Verwendung als Anfahrkupplung oder als Schaltkupplung vorgesehen ist, mit einer Sensoranordnung zur Erfassung der Kupplungstemperatur der Kupplung, die eine Temperaturerfassungseinrichtung aufweist, mit wenigstens einem im wesentlichen die Ausgangstemperatur des aus der Kupplung gelangenden Öles messenden, die aktuelle Oberflächentemperatur der Kupplung ableitenden Temperatursensoren.

Aus dem Stand der Technik sind verschiedene Rückkopplungsanordnungen für Kupplungen bekannt. Es ist bei diesen Rückkopplungsanordnungen für Kupplungen generell zu beachten, daß die Oberflächentemperatur einer Kupplung im wesentlichen die Charakteristik des Reibungskoeffizienten bestimmt, und nicht die Ölwannentemperatur. Die Oberflächentemperatur hat dabei im Vergleich zu der Ölwannentemperatur eine derartige Abweichung, die signifikant und wichtig für eine erfolgreiche Kupplungsfunktion ist. Die meisten der bekannten Rückkopplungsanordnungen für Kupplungen stellen allerdings die Kupplungseigenschaften auf der Basis der Ölwannentemperatur und nicht der Oberflächentemperatur ein, wie z.B. aus der EP 1 191 258 bekannt. Weiterhin variiert der Reibungskoeffizient mit der Oberflächentemperatur der Kupplung bzw. mit der charakteristischen Temperatur sowie wesentlich auch der Schleifgeschwindigkeit. Die dabei entstehende Abweichung kann nicht von den aus dem Stand der Technik bekannten Rückkopplungsanordnungen für Kupplungen abgedeckt werden. Der Reibungskoeffizient wird dabei bei der Aufbringung von Druck, Oberflächentemperatur und einem Schleifen wesentlich variieren. Diese große Abweichung kann mit einem herkömmlichen PID- Steuersystem nicht kompensiert werden, es ist vielmehr die Rückkopplungsanordnung für ein solche Kompensation aufzurüsten.

Der dritte wesentliche Nachteil der bekannten Rückkopplungsanordnungen für Kupplungen besteht in der Tatsache, daß die Kupplungs- Hysterese nicht kompensiert werden kann. Es bestehen signifikante Unterschiede in den Hysterese-Kurven basierend auf den Oberflächentemperaturen der Kupplung, die deutlich variieren. Eine geschlossene Schleife einer konstanten Bewegungskontrolle mit diesen Unterschieden zwischen den steigenden und fallenden Drehmomentenkurven ist sehr schwer zu erreichen. Es besteht ein Unterschied von 0,3 bar auf der steigenden Seite und von 0,2 bar auf der fallenden Seite. Der gesamte Hysterese-Unterschied ist etwa 0,6 bar; das bedeutet, daß zur Erzielung einer konstanten 230 Nm Bewegung auf der Ausgangswelle ein Unterschied im Druck von 0.,6 bar gegeben ist. Der Druckunterschied der Bewegung ist gewöhnlich bei normalen Funktionstemperaturen etwa 0,3 bar. Auch hier wird das Steuersystem nicht in der Lage sein, diesen Unterschied durch eine klassisch geschlossene bzw. offene Schleifen- Steuerung, wie aus dem Stand der Technik bekannt, abzudecken.

Der vierte Nachteil bei den bekannten Anordnungen ist die gesamte auftretende Kupplungs- Hysterese bei allen anderen Funktions- Drehmomenten. Es besteht eine gemessene Hysterese des Kupplungs- Momentes bis zu 100 Nm plus 9 Nm auf der fallenden Seite und 7 Nm auf der steigenden Seite bezogen auf das Hauptdrehmoment. Eine solche Hysterese- Abweichung ist insb. nicht akzeptierbar für Doppelkupplungssysteme bei denen eine synchrone Schaltsteuerung insb. für ein leichtes Gang- Rauf- und Runter- Schalten durchgeführt wird. Der gesamte Unterschied liegt bei etwa 16% für stabilisierte Oberflächentemperaturen der Kupplung. Diese Abweichung ist um so schlimmer, wenn die Temperatur fällt. Die bekannten Rückkopplungsanordnungen für Kupplungen sind insgesamt nicht dazu geeignet, diese Hysterese- Abweichung zu kompensieren.

Aus dem Stand der Technik ist aus der JP 0 607 4 317A auch eine Rückkopplungsanordnung für eine Reibungsübertragung bei einer Kupplung bekannt, bei der zur Vermeidung einer Beschädigung durch Hitze- Entwicklung der Temperatur- Zustand u.a. am Kupplungsausgang gemessen wird. Genau gesagt messen zwei Öltemperatur- Sensoren die Temperatur einer in eine Kupplung hineingelangenden Flüssigkeit und die Temperatur der aus der Kupplung heraustretenden Flüssigkeit. Eine Temperaturdifferenz- Kalkulationseinheit bestimmt die Differenz der mit den Sensoren gemessenen Temperaturen. Eine weitere Temperatur- Kalkulationseinheit bestimmt die Temperatur der Kupplungsscheibe über das Ausgangssignal der Temperaturdifferenz- Kalkulationseinheit und des einen Öltemperatur- Sensoren und sendet das Ergebnis an einen ersten Komparator. Eine Innen- Außen- Umfangs- Temperaturdifferenz- Kalkulationseinheit bestimmt die Temperaturdifferenz zwischen Innen- und Außenseite der Kupplung und sendet das Ergebnis an einen zweiten Komparator. Wenn die Temperatur der Kupplungsscheibe und die von der Innen- Außen- Umfangs- Temperaturdifferenz- Kalkulationseinheit bestimmte Temperaturdifferenz einen festgelegten Referenzwert übersteigen, werden die beiden Komparatoren über einen Schaltkreis eine Einrichtung für ein Alarmsignal aktivieren. Es sollen dadurch wie erwähnt Beschädigungen durch Hitzeentwicklung vermieden werden. Nachteilig bei dieser Ausführungsform ist vor allem die unzureichende Ausnutzung insb. des gemessenen Temperaturwertes der aus der Kupplung heraustretenden Flüssigkeit, eine Verbesserung wäre hier wünschenswert.

Weiterhin ist in der DE 38 00 607 A1 eine Kupplung offenbart in einem geschlossenen Kupplungsgehäuse mit einer hydraulischen Betätigungsvorrichtung, welche die Kupplung ein- bzw auskuppelt. Bei derartigen geschlossenen Kupplungsgehäusen ist die Gefahr der thermischen Überlastung gegeben. Es ist dazu an der Kupplung zumindest ein Temperatursensor vorgesehen, welcher die Temperatur im Kupplungsgehäuse erfaßt und mit der Betätigungsvorrichtung in Wirkverbindung steht, und bei Überschreiten einer vorgebbaren Grenztemperatur die Betätigungsvorrichtung die Kupplung schaltet oder eine weitere Betätigung verhindert. Auf diese Weise soll eine Beschädigung der Kupplung durch thermische Überlastung verhindert werden. Die allgemeine Verwendung von Temperatursensoren zum Schutz von Kupplungseinrichtungen vor thermischer Überlastung ist auch in zahlreichen anderen Ausgestaltungsvarianten bekannt.

Ausgehend von diesen bekannten Anordnungen liegt der Erfindung die Aufgabe zugrunde, die bekannten Anordnungen unter Beibehaltung der bisherigen Vorteile in der Weise zu verbessern bzw. weiterzuentwickeln, daß die oben beschriebenen Nachteile vermieden werden, es sollen dabei insb. die Kupplungseigenschaften in Abhängigkeit der Oberflächentemperatur bestimmt werden, da diese Kenngröße wesentlich die Charakteristik der Kupplungseigenschaften, wie z.B. des Reibungskoeffizienten bestimmt, und nicht, wie teilweise bei den bekannten Anordnungen, über die Ölwannentemperatur. Es soll dabei die Oberflächentemperatur durch die Temperatursensoren derart abgeleitet werden, daß die gemessenen Temperaturwerte möglichst unmittelbar und unverfälscht erfaßt werden. Die gewünschte Anordnung soll dabei außerdem zuverlässig und sicher in den Funktionseigenschaften sowie einfach aufgebaut und kostengünstig herstellbar sein.

Die Aufgabe wird erfindungsgemäß dadurch gelöst, der wenigstens eine, im wesentlichen die Ausgangstemperatur des aus der Kupplung gelangenden Öles messende, die aktuelle Oberflächentemperatur ableitende Temperatursensor im direkten, unmittelbaren, außerhalb der Kupplung liegenden Ausgangsbereich der Kupplung angeordnet ist.

Auf diese Weise wird erstmalig mit einfachen Mitteln eine Rückkopplungsanordnung für eine Kupplung geschaffen, die die oben beschriebenen Nachteile der bisher bekannten Anordnungen vermeidet und eine zuverlässige und sichere Überwachung der relevanten Kupplungseigenschaften ermöglicht. Die erfindungsgemäße Anordnung bestimmt dabei die Kupplungseigenschaften insb. in Abhängigkeit der Oberflächentemperatur, was sehr vorteilhaft ist, da diese Kenngröße wesentlich die Charakteristik der Kupplungseigenschaften, wie z.B. des Reibungskoeffizienten bestimmt. Dies erfolgte bei den bekannten Anordnungen größtenteils über die Ölwannentemperatur. Die Bestimmung der Kupplungseigenschaften in Abhängigkeit der Oberflächentemperatur bzw. der diese ableitende Kupplungsausgangstemperatur im direkten, unmittelbaren, außerhalb der Kupplung liegenden Ausgangsbereich hat außerdem den Vorteil, daß die Erfassung der Kupplungstemperatur möglichst nah an dem Austritt des Öles aus der Kupplung erfolgt, so daß die Ableitung der die Kupplungseigenschaften wesentlich bestimmenden Oberflächentemperatur möglichst unmittelbar und unverfälscht erfolgt, da an dieser Stelle die Öltemperatur praktisch der Kupplungstemperatur entspricht. Gegenüber den Ausführungsformen, bei denen die Ausgangstemperatur direkt in der Kupplung gemessen wird, ergeben sich insb. in fertigungstechnischer Hinsicht erhebliche Vorteile. Die erfindungsgemäße Rückkopplungsanordnung wird insb. verwendet für geschlossene oder offene Schleifensteuerungen für Anfahrkupplungen oder Doppelkupplungssysteme für Schaltungen, wie z.B. differentiale Powershift- Schaltungen, wobei hier die erfindungsgemäße Rückkopplungsanordnung zur Steuerung des Rauf- und Runterschaltens dient.

Bei der bevorzugten Ausführungsform der vorliegenden Erfindung ist zweckmäßig der wenigstens eine, im wesentlichen die Ausgangstemperatur des aus der Kupplung gelangenden Öles messende, die aktuelle Oberflächentemperatur ableitende Temperatursensor am unteren seitlichen Gehäusebereich der Kupplung in vertikaler Richtung liegend angeordnet. Eine derartige Ausbildung ist konstruktiv einfach zu verwirklichen und erlaubt trotzdem eine i.w. unmittelbare und damit unverfälschte Messung der Ausgangstemperatur des aus der Kupplung gelangenden Öles.

Bei einer davon abweichenden Ausführungsform der vorliegenden Erfindung ist der wenigstens eine, im wesentlichen die Ausgangstemperatur des aus der Kupplung gelangenden Öles messende, die aktuelle Oberflächentemperatur ableitende Temperatursensor im direkten Bereich unterhalb der Kupplung in horizontaler Richtung liegend und in vertikaler Richtung leicht versetzt in einer dafür vorgesehenen Ausnehmung liegend angeordnet. Bei dieser Ausführungsform ist in besonders vorteilhafter Weise eine i.w. unmittelbare und damit unverfälschte Messung der Ausgangstemperatur des aus der Kupplung gelangenden Öles möglich.

Bei einer weiteren abgewandelten Ausführungsform ist der wenigstens eine, im wesentlichen die Ausgangstemperatur des aus der Kupplung gelangenden Öles messende, die aktuelle Oberflächentemperatur ableitende Temperatursensor im direkten Bereich unterhalb der Kupplung in horizontaler Richtung liegend und in vertikaler Richtung leicht versetzt in einem mittig in einer dafür vorgesehenen Ausnehmung liegenden kreisförmigen Einsatz, mittig in diesem Einsatz liegend, angeordnet. Diese Ausbildung erlaubt ebenfalls vorteilhaft eine i.w. unmittelbare und damit unverfälschte Messung der Ausgangstemperatur des aus der Kupplung gelangenden Öles und gleichzeitig wird durch die Austauschbarkeit des in der Ausnehmung befindlichen Einsatzes eine höhere Flexibilität erreicht. Dabei empfiehlt es sich, daß der den wenigstens einen Temperatursensoren aufnehmende, mittig in der Ausnehmung liegende Einsatz gleichmäßig über den Umfang verteilt, radial nach außen angeordnete Durchlaßöffnungen aufweist.

Nach einem weiteren Merkmal der vorliegenden Erfindung ist vorgesehen, daß die Rückkopplungsanordnung derart ausgebildet ist,
- daß die Kupplungsausgangstemperatur zur genaueren Bestimmung der Kupplungseigenschaften, insb. des Reibungskoeffizienten in derem Schleifzustand, statischem Zustand oder unterbrochenem Zustand, dient, und zwar als Eingangsgröße für die Rückkopplungsanordnung,
- daß die Kupplungsausgangstemperatur zur Bestimmung von steigenden oder fallenden Hysterese- Abweichungen der Kupplung in Bezug auf eine Standard-Hysterese- Funktion dient, und zwar als Eingangsgröße für die Rückkopplungsanordnung,
- daß die Kupplungsausgangstemperatur zur Auslösung sofortiger Schutzfunktionen zum Schutz der Kupplung vor Überhitzung dient, wie insb. einer Begrenzung eines Schleifens, einem Öffnen oder Schließen der Kupplung und/oder einem Auslösen einer zur Erhöhung eines Kühlflusses dienenden Betätigung.

Weiterhin ist nach einem weiteren Merkmal der vorliegenden Erfindung vorgesehen, daß die Rückkopplungsanordnung zur Erhöhung des Kühlflusses ein den Steuerfluß beeinflussendes Ventilsystem umfaßt. Zweckmäßig empfiehlt sich dabei, daß die Rückkopplungsanordnung zur Betätigung des den Steuerfluß beeinflussenden Ventilsystems ein variables Magnetventil umfaßt. Über diese Mittel können die erwähnten Schutzfunktionen zum Schutz der Kupplung z.B. vor Überhitzung aktiviert werden, wobei sich dadurch eine Reduzierung der Oberflächentemperatur ergibt, und dadurch die Lebensdauer der Reibungskupplung erhöht wird. Bei einer dazu alternativen Ausführungsform umfaßt die Rückkopplungsanordnung zur Betätigung des den Steuerfluß beeinflussenden Ventilsystems eine PWM- Betätigungseinheit.

Nach einem weiteren Ausgestaltungsmerkmal der vorliegenden Erfindung ist vorgesehen, daß die Rückkopplungsanordnung einen Steueralgorithmus umfaßt, der zur Bestimmung von steigenden oder fallenden Hysterese- Zuständen der Kupplungseigenschaften auf Grundlage einer Magnetventil - Hysterese-Kompensation dient. Dies ist aufgrund der Proportionalität zwischen dem Ausgangsdruck des Magnetventils und der Kupplungskapazität möglich. Eine derartige Anordnung hat den Vorteil, daß die Ausgangswerte dieser Magnet- Ventil - Hysterese- Kompensation für die Bestimmung der gewünschten Zustände verwendet werden, es erfordert dieses Vorgehen kein Vorsehen von Drucksensoren in oder an der Kupplung.

Bei einer alternativen Ausführungsform der vorliegenden Erfindung umfaßt die Rückkopplungsanordnung einen Steueralgorithmus, der zur Bestimmung von steigenden oder fallenden Hysterese- Zuständen von Kupplungseigenschaften auf Grundlage des durch einen Drucksensor gemessenen aktuellen Kupplungsdruckes dient. Hier wird also ein Drucksensor für die Kupplung verwendet, ansonsten ist der Aufbau der Steuerung der gleiche wie bei dem zuvor erwähnten Ausführungsbeispiel.

Nach einem anderen Ausgestaltungsmerkmal der vorliegenden Erfindung empfiehlt es sich, daß die Rückkopplungsanordnung einen Steueralgorithmus umfaßt, der zur Ableitung der aktuellen Oberflächentemperatur der Kupplung aus einem WärmeEnergie- Kalkulatons- Modell dient. Dabei empfiehlt es sich nach einem letzten Merkmal der vorliegenden Erfindung, daß das Wärme- Energie- Kalkulations- Modell für den Steueralgorithmus der Rückkopplungsanordnung ein Durchflußraten-Kalkulations- Modell und ein Kupplungs- Energie- Kalkulations- Modell umfaßt. Es wird durch dieses Vorgehen eine Kalkulationsmethode verwirklicht, bei der die Oberflächentemperatur von einer Durchflußraten- Kalkulation und einem Kupplungs-Energie- Kalkulations- Modell abgeleitet wird. In diesem Falle ist kein Temperatursensor zur direkten Messung bzw. Ableitung der Oberflächentemperatur erforderlich, es wird vielmehr dieser Meßwert aus den bei den beiden erwähnten Modellen entstandenen Ausgangswerten abgeleitet. Die weitere Verwendung des erhaltenen charakteristischen Temperaturwertes ist identisch wie bei den anderen Ausführungsformen.

Die Erfindung ist in den Figuren der Zeichnung in mehreren Ausführungsbeispielen dargestellt. Es zeigen:
- Fig. 1: eine schematische Teil- Schnittansicht eines Testaufbaus zur Ableitung der charakteristischen Kupplungs- Temperatur für die erfindungsgemäße Rückkopplungsanordnung,
- Fig.2: eine schematische Teil- Schnittansicht einer ersten Ausstattungsvariante einer Kupplung für ein Fahrzeug mit der erfindungsgemäßen Rückkopplungsanordnung,
- Fig.3: eine schematische Teil- Schnittansicht einer zweiten Ausstattungsvariante einer Kupplung für ein Fahrzeug mit der erfindungsgemäßen Rückkopplungsanordnung,
- Fig.4: eine schematische Teil- Schnittansicht einer dritten Ausstattungsvariante einer Kupplung für ein Fahrzeug mit der erfindungsgemäßen Rückkopplungsanordnung,
- Fig. 5: eine schematische Teil- Schnittansicht einer letzten Ausstattungsvariante einer Kupplung für ein Fahrzeug mit der erfindungsgemäßen Rückkopplungsanordnung.

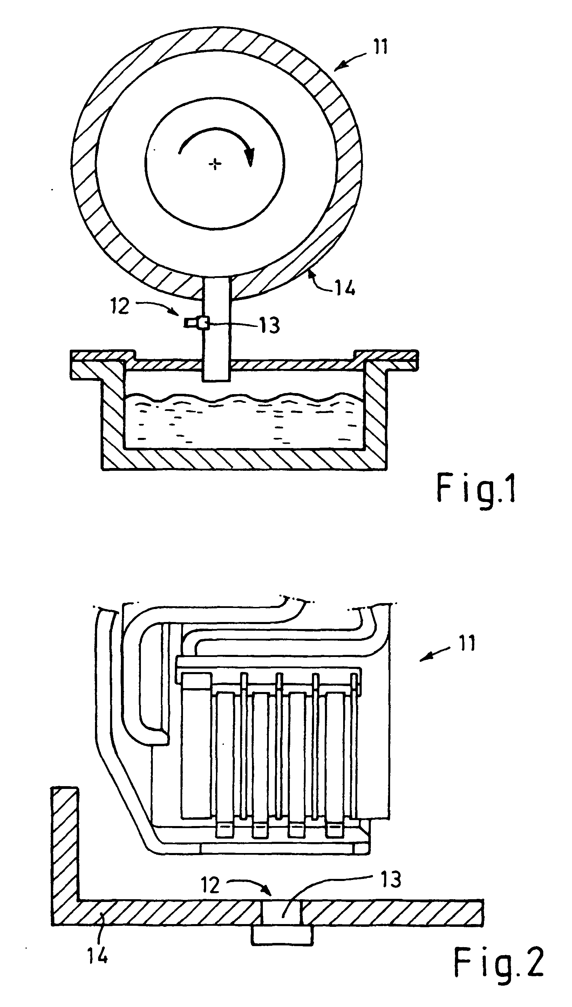

Die erfindungsgemäße Rückkopplungsanordnung ist generell mit 10 bezeichnet. Die Rückkopplungsanordnung 10 ist vorgesehen für eine mit 11 bezeichnete Kupplung, insb. für eine Ölbadscheibenkupplung, die insb. für eine Verwendung als Anfahrkupplung oder als Schaltkupplung vorgesehen ist. Die Rückkopplungsanordnung 10 für die Kupplung 11 umfaßt eine Sensoranordnung zur Erfassung der Kupplungstemperatur der Kupplung 11, die wiederum eine Temperaturerfassungseinrichtung 12 aufweist. Die Temperaturerfassungseinrichtung 12 ist mit wenigstens einem im wesentlichen die Ausgangstemperatur des aus der Kupplung 11 gelangenden Öles messenden, die aktuelle Oberflächentemperatur der Kupplung 11 ableitenden Temperatursensoren 13 versehen, siehe dazu z.B. die Fig. 1 der Zeichnung. In dieser Fig. 1 ist ein Testaufbau zur Ableitung der charakteristischen Kupplungs- Temperatur für die erfindungsgemäße Rückkopplungsanordnung 10 dargestellt.

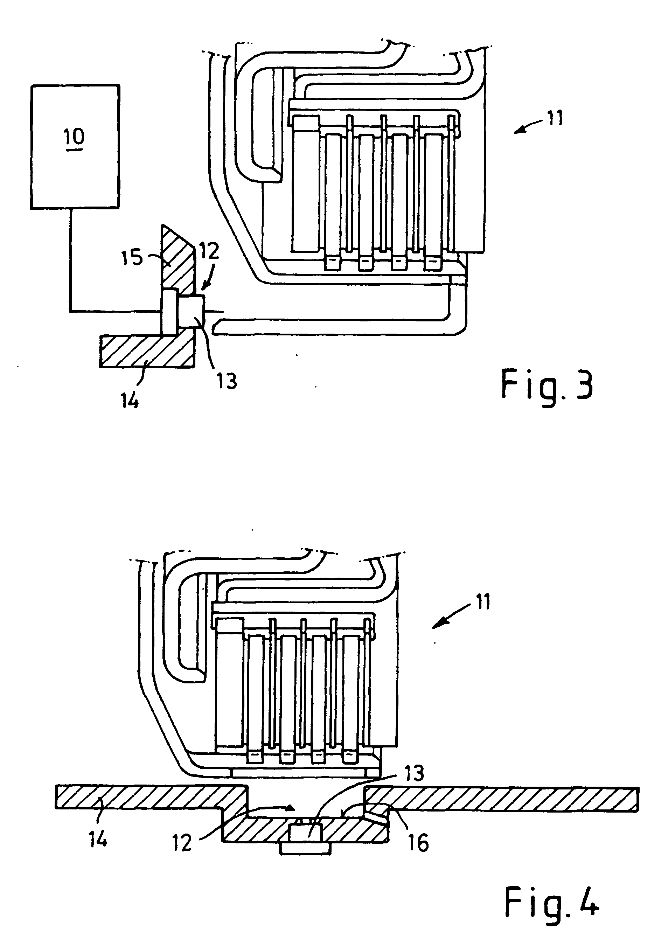

Es ist dabei erfindungsgemäß der wenigstens eine, im wesentlichen die Ausgangstemperatur des aus der Kupplung 11 gelangenden Öles messende, die aktuelle Oberflächentemperatur ableitende Temperatursensor 13 im direkten, unmittelbaren, außerhalb der Kupplung 11 liegenden Ausgangsbereich der Kupplung 11 angeordnet, siehe dazu insb. die Darstellungen in den Fig. 3 bis 5 der Zeichnung. Es ist dabei bei der bevorzugten Ausführungsform der vorliegenden Erfindung, siehe dazu die Fig. 3 der Zeichnung, der wenigstens eine, im wesentlichen die Ausgangstemperatur des aus der Kupplung 11 gelangenden Öles messende, die aktuelle Oberflächentemperatur ableitende Temperatursensor 13 am unteren seitlichen Gehäusebereich 15 im direkten, unmittelbaren, außerhalb der Kupplung 11 liegenden Ausgangsbereich der Kupplung 11 in vertikaler Richtung liegend angeordnet. Eine derartige Ausbildung erlaubt insb. eine i.w. unmittelbare und damit unverfälschte Messung der Ausgangstemperatur des aus der Kupplung gelangenden Öles und ist trotzdem konstruktiv einfach zu verwirklichen.

Bei einer davon abweichenden Ausführungsform ist, siehe dazu die Fig. 4 der Zeichnung, der wenigstens eine, im wesentlichen die Ausgangstemperatur des aus der Kupplung 11 gelangenden Öles messende, die aktuelle Oberflächentemperatur ableitende Temperatursensor 13 im direkten Bereich unterhalb der Kupplung 11 in horizontaler Richtung liegend und in vertikaler Richtung leicht versetzt in einer dafür vorgesehenen Ausnehmung 16 liegend angeordnet. In diesem Falle ist in besonders vorteilhafter Weise eine i.w. unmittelbare und damit unverfälschte Messung der Ausgangstemperatur des aus der Kupplung 11 gelangenden Öles möglich.

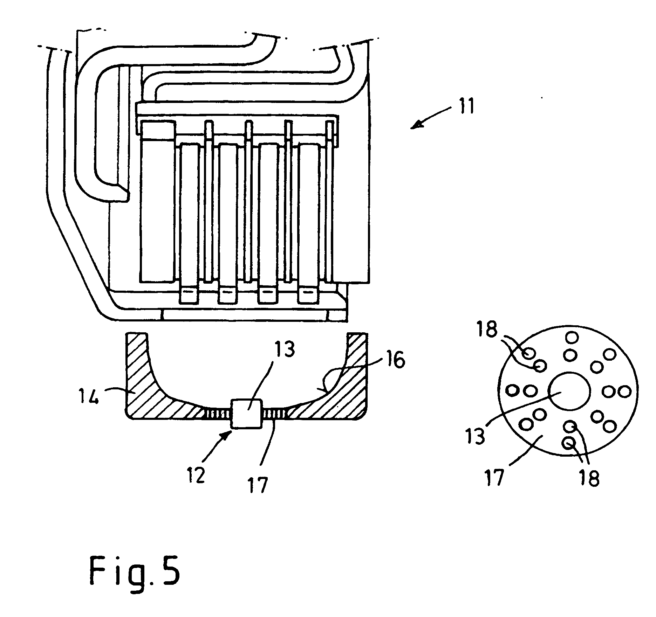

Bei einer weiteren abgewandelten Ausführungsform ist, siehe die Fig. 5 der Zeichnung, der wenigstens eine, im wesentlichen die Ausgangstemperatur des aus der Kupplung 11 gelangenden Öles messende, die aktuelle Oberflächentemperatur ableitende Temperatursensor 13 im direkten Bereich unterhalb der Kupplung 11 in horizontaler Richtung liegend und in vertikaler Richtung leicht versetzt in einem mittig in einer dafür vorgesehenen Ausnehmung 16 liegenden kreisförmigen Einsatz 17, mittig in diesem Einsatz 17 liegend, angeordnet. Auch diese Ausbildung erlaubt eine i.w. unmittelbare und damit unverfälschte Messung der Ausgangstemperatur des aus der Kupplung 11 gelangenden Öles und gleichzeitig wird durch die Austauschbarkeit des in der Ausnehmung 16 befindlichen Einsatzes 17 eine höhere Flexibilität erreicht. Bei der in Fig. 5 dargestellten Ausführungsform ist dabei vorgesehen, daß der den wenigstens einen Temperatursensoren 13 aufnehmende, mittig in der Ausnehmung 16 liegende Einsatz 17 gleichmäßig über den Umfang verteilt, radial nach außen angeordnete Durchlaßöffnungen 18 aufweist.

Bei den dargestellten Ausführungsformen ist die Rückkopplungsanordnung 10 derart ausgebildet,
- daß die Kupplungsausgangstemperatur zur genaueren Bestimmung der Kupplungseigenschaften, insb. des Reibungskoeffizienten in derem Schleifzustand, statischem Zustand oder unterbrochenem Zustand, dient, und zwar als Eingangsgröße für die Rückkopplungsanordnung 10,
- daß die Kupplungsausgangstemperatur zur Bestimmung von steigenden oder fallenden Hysterese- Abweichungen der Kupplung 11 in Bezug auf eine Standard-Hysterese- Funktion dient, und zwar als Eingangsgröße für die Rückkopplungsanordnung 10,
- daß die Kupplungsausgangstemperatur zur Auslösung sofortiger Schutzfunktionen zum Schutz der Kupplung 11 vor Überhitzung dient, wie insb. einer Begrenzung eines Schleifens, einem Öffnen oder Schließen der Kupplung 11 und/oder einem Auslösen einer zur Erhöhung eines Kühlflusses dienenden Betätigung.

Es ist dazu in der Fig. 1 der Zeichnung ein Testaufbau zur Ableitung der charakteristischen Kupplungs- Temperatur für die erfindungsgemäße Rückkopplungsanordnung 10 schematisch dargestellt, wobei hier die Kupplung 11 als rotierende Kupplung mit einem Gehäuse 14 ausgebildet ist, wobei im Bereich des Ausganges der Kupplung 11 ein Temperatursensor 13 einer Temperaturerfassungseinrichtung 12 angeordnet ist. Außerdem ist in der Fig. 1 schematisch eine nicht bezeichnete Ölwanne mit schematisch darin angedeutetem Öl dargestellt.

Die erfindungsgemäße Rückkopplungsanordnung 10 umfaßt zur Erhöhung des Kühlflusses ein den Steuerfluß beeinflussendes, nicht dargestelltes Ventilsystem, wobei die Rückkopplungsanordnung 10 zur Betätigung des den Steuerfluß beeinflussenden Ventilsystems bei einer Ausführungsform ein variables Magnetventil und bei einer anderen Ausführungsform z.B. ein PWM- Betätigungselement umfaßt.

Die erfindungsgemäße Rückkopplungsanordnung 10 umfaßt in ihrer bevorzugten Ausbildung eine Echtzeitmessung der charakteristischen Temperatur der Kupplung und zwar über einen am Ausgang der Kupplung 11 positionierten Temperatursensoren 13, siehe wieder die Fig.1 sowie auch die Fig. 2 der Zeichnung. Es verbleibt dabei der Grundaufbau der Rückkopplungsanordnung gegenüber den bekannten Lösungen i.w. unverändert. In Bezug auf diese Ausführung haben Messungen ergeben, daß die Übertragungsflüssigkeit, die zwischen den Reibungsplatten der Kupplung 11 zu deren Ausgang in die Ölwanne gelangt, und die laufende Temperatur an dem Ausgangsbereich äquivalent zu der Oberflächentemperatur der Kupplung 11 ist. Der Temperatursensor 13 an diesem Ausgangsbereich der Kupplung 11 wird derart positioniert, daß er die Temperatur in Echtzeit mißt, der dabei sich ergebende charakteristische Temperaturwert wird dann einem Programm zum Überhitzungschutz zugeführt, um die Lebensdauer der Kupplung 11 zu erhöhen. Es werden dabei die Temperaturen verändert, z.B. durch eine Begrenzung des Schleifens, ein Öffnen oder Schließen der Kupplung 11 und/oder einem Auslösen einer zur Erhöhung eines Kühlflusses dienenden Betätigung über das erwähnte Ventilsystem, das z.B. über das variable Magnetventil oder die PWM- Betätigungseinheit aktiviert wird. Dabei wird die Oberflächentemperatur der Kupplung 11 abgesenkt, um die Lebensdauer der Reibungskupplung zu erhöhen. Zum zweiten wird die charakteristische Oberflächentemperatur der Kupplung 11 einer Kalkulationseinheit zugeführt, in der dynamische, statische oder Reibungswerte für den unterbrochenen Zustand ausgewählt werden, basierend auf diesen Echtzeit - Meß- Temperaturen und basierend auf dem Zustand der Kupplung 11. Die Reibungswerte werden dann der Rückkopplungsanordnung 10 zugeführt, um die für eine offene oder geschlossene Kupplungsschleifensteuerung erforderlichen Kupplungseigenschaften festzulegen. Dies ist vor allem wichtig, um über i.w. alle Temperaturbereiche eine zuverlässige und sichere Kupplungsfunktion zu erhalten. Diese Ausbildung löst das Problem, die Oberflächentemperatur der Kupplung nicht zu kennen und gleicht Abweichungen zwischen der Ölwannentemperatur und der Oberflächentemperatur der Kupplung 11 aus.

Mit der erfindungsgemäßen Anordnung können ferner Hysteresekurven der Kupplung 11 basierend auf der charakteristischen Kupplungstemperatur bzw. der Oberflächentemperatur der Kupplung 11 ausgewählt werden. Dies kann z.B. dadurch verwirklicht werden, das ausgehend von einer steigenden bzw. fallenden Kurve für die Kupplungseigenschaften eine Kompensation über Addier- bzw. Multiplizier-Funktionen, basierend auf der charakteristischen Temperatur der Kupplung 11, erreicht wird.

Bei der erfindungsgemäßen Rückkopplungsanordnung 10 bestehen zwei Möglichkeiten, auf welche Weise eine Bestimmung zwischen steigenden und fallenden Hysterese- Zuständen der Kupplungseigenschaften erfolgt. Bei der bevorzugten Ausführungsform umfaßt dabei die erfindungsgemäße Rückkopplungsanordnung einen Steueralgorithmus, der zur Bestimmung von steigenden oder fallenden Hysterese- Zuständen der Kupplungseigenschaften auf Grundlage einer Magnet- Ventil - Hysterese- Kompensation dient. Es wird dabei der Ausgangswert dieser Magnet- Ventil - Hysterese- Kompensation einer nicht dargestellten Steuereinheit der Kupplung 11 zugeführt, die dann entscheidet, welche Hysterese- Kurve (steigend oder fallend) verwendet wird. Bei dieser Ausführungsform wird kein Drucksensor benötigt. Bei dieser Ausführungsform der erfindungsgemäßen Rückkopplungsanordnung 10 wird das Eingangssignal für die Magnet- Ventil - Hysterese- Kompensation zunächst einem entsprechenden Hysterese- Kalkulations-Algorithmus zugeführt, der dann einen Vergleich zwischen dem aktuellen und dem letzten Meßwert durchführt. Basierend auf der Anzeige des Meßwertes wird dann entschieden, ob sich das System auf der steigenden oder fallenden Hysterese- Kurve bewegt oder nicht. Diese Entscheidung wird durch einen Vergleich zwischen dem Differenzwert und einem kalkulierten Differenzwert durchgeführt, um die Entscheidung zu unterstützen, ob die steigende oder fallende Hysterese- Kurve ausgewählt wird. Diese Entscheidung wird durch Setzen eines Signales auf wahr oder falsch ausgedrückt, durch dieses Signal wird die Auswahl zwischen steigender oder fallender Hysterese- Kurve dann durchgeführt. Die laufenden Zustände werden dabei dem Fahrer bzw. dem Kalkulations- Algorithmus zugeführt. Zur Durchführung wird dabei dieses Signal einer Steuereinheit der Rückkopplungsanordnung 10 zugeführt, die zwischen der steigenden und fallenden Hysterese- Kurve der Kupplungseigenschaften auswählt. Dabei wird basierend auf dem charakteristischen Temperaturwert gegenüber dem statischen, dynamischen und dem unterbrochenen Reibungskoeffizienten die steigende oder fallende Hysterese- Kurve der Kupplungseigenschaften ausgewählt. Diese Auswahl wird anhand des "wahr/falsch"-Signales ausgeführt. Basierend auf dieser Entscheidung wird der richtige bzw. notwendige Druckwert zu einer weiteren Steuereinheit weitergeleitet. Mit dieser Anordnung wird ein genaueres Setzen des Druckes der offenen Schleife erzielt, und dadurch eine genauere Steuerung und Kontrolle der Kupplungseigenschaften. Diese Ausführungsform erfordert keinen Drucksensor für die Kupplung 11.

Bei einer alternativen Ausführungsform umfaßt die Rückkopplungsanordnung 10 einen Steueralgorithmus, der zur Bestimmung von steigenden oder fallenden Hysterese- Zuständen von Kupplungseigenschaften auf Grundlage des durch einen Drucksensor gemessenen aktuellen Kupplungsdruckes dient. Dabei ist der Aufbau der Steuerlogik der gleiche wie bei der zuvor beschriebenen Ausführungsform, außer daß nunmehr der Druckmeßwert der Kupplung 11 für die Hysterese- Kompensations-Kalkulation verwendet wird.

Bei einer weiteren alternativen Ausführungsform umfaßt die Rückkopplungsanordnung 10 einen Steueralgorithmus, der zur Ableitung der aktuellen Oberflächentemperatur der Kupplung 11 aus einem Wärme- Energie-Kalkulations- Modell dient. Dabei umfaßt das Wärme- Energie- Kalkulations- Modell für den Steueralgorithmus der Rückkopplungsanordnung 10 ein Durchflußraten-Kalkulations- Modell und ein Kupplungs- Energie- Kalkulations- Modell. Es weist dabei die Rückkopplungsanordnung einen mit den anderen Ausführungsformen gleichen Aufbau auf, außer daß die gemessene charakteristische Temperatur der Kupplung 11 durch eine über ein Wärme- Energie- Kalkulations- Modell bestimmte Temperatur ersetzt wird. Es ist dabei die über das Wärme- Energie- Kalkulations-Modell ermittelte charakteristische Temperatur die angenommene Oberflächentemperatur der Kupplung 11. Das Wärme- Energie- Kalkulations- Modell umfaßt dabei ein Durchflußraten- Kalkulations- Modell und ein Kupplungs- Energie-Kalkulations- Modell. Die Eingangsgröße für das Durchflußraten- Kalkulations- Modell ist der effektive Durchfluß von der an dem Haupt- Regler angeordneten Pumpe, abhängig von dem Zustand der Pumpe, insb. deren Eingangsgeschwindigkeit. Weitere Eingangsgrößen sind die Übertragungs- Ölwannentemperatur und der Zustand der Betätigung zum Auslösen bzw. Blockieren eines Kühlflusses für die Kupplung 11. Die wesentlichen, mit diesem Modell durchgeführten Funktionsschritte werden nachfolgend erläutert:
1.) Berechnung der auf den Eingang des Kühlsystems stromab- oder stromaufwärts in Bezug auf den Hauptregler aufgebrachten Durchflußrate basierend auf der Ölwannentemperatur,
2.) Berechnung der Durchflußrate entlang des Kühlsystems resultierend in der zu der Kupplung transportierten Durchflußrate,
3.) Berechnung der Ausgangstemperatur des Kühlsystems basierend auf der Ölwannentemperatur und der Motor- Kühltemperatur.

Die Ausgangsgröße der Durchflußraten- Kalkulation ist der Kupplungs- Schmierfluß und die Ausgangstemperatur des Kühlsystems, wobei diese beiden Größen die Eingangsgrößen für das Kupplungs- Energie- Kalkulations- Modell bilden. Weitere Eingangsgrößen für das Kupplungs- Energie- Kalkulations- Modell sind das absolute Gleiten und die Drehmomentfähigkeit. Weitere Eingangsgröße ist die Definition des von der Zustandseinrichtung der Kupplung abgeleiteten Kupplungszustandes, wobei die erforderlichen Zustände eine offene, eine geschlossene und eine schleifende Kupplung sind. Basierend auf diesen Eingaben kann die eingegebene Energie berechnet werden, die in die Kupplung eingebracht wird. Die erforderliche Durchflußrate von dem Kühlsystem ist die berechnete Rate für jeden der Zustände offen, geschlossen oder schleifend der Kupplung. Diese Durchflußrate hängt von der Geometrie der Kupplung ab, die dann einen Transport des Durchflusses entlang der Kupplung in geschlossenem, schleifendem oder offenem Zustand erlaubt. Der charakteristische Temperaturwert der Kupplung wird dann über Standard-Wärmeübertragungskalkulationen von der Kupplungsoberfläche zu der Übertragungsflüssigkeit berechnet, basierend auf dem Kühlungs- Eingangszustand der Flüssigkeit und dem Energieeingangszustand der Kupplung. Diese Annäherung repräsentiert eine Kalkulations- Methode zur Ableitung der Kupplungsoberflächentemperatur von einer Durchflußratenkalkulation und einem Kupplungs- Energie- Kalkulations- Modell. In diesem Falle ist kein Temperatursensor zur direkten Messung bzw. Ableitung der Oberflächentemperatur erforderlich, es wird vielmehr dieser Meßwert aus den bei den beiden erwähnten Modellen entstandenen Ausgangswerten abgeleitet. Die weitere Verwendung des erhaltenen charakteristischen Temperaturwertes ist identisch wie bei den anderen Ausführungsformen.

Mit der erfindungsgemäßen Rückkopplungsanordnung 10 wird erstmalig eine zuverlässige und sichere Überwachung der relevanten Kupplungseigenschaften ermöglicht, wobei insb. die oben beschriebenen Nachteile der bekannten Anordnungen vermieden werden. Die erfindungsgemäße Anordnung bestimmt dabei die Kupplungseigenschaften insb. in Abhängigkeit der Oberflächentemperatur, was sehr vorteilhaft ist, da diese Kenngröße wesentlich die Charakteristik der Kupplungseigenschaften, wie z.B. des Reibungskoeffizienten bestimmt. Dies erfolgte bei den bekannten Anordnungen größtenteils über die Ölwannentemperatur. Die Bestimmung der Kupplungseigenschaften in Abhängigkeit der Oberflächentemperatur bzw. der diese ableitende Kupplungsausgangstemperatur im direkten, unmittelbaren, außerhalb der Kupplung liegenden Ausgangsbereich hat außerdem den Vorteil, daß die Erfassung der Kupplungstemperatur möglichst nah an dem Austritt des Öles aus der Kupplung erfolgt, so daß die Ableitung der die Kupplungseigenschaften wesentlich bestimmenden Oberflächentemperatur möglichst unmittelbar und unverfälscht erfolgt, da an dieser Stelle die Öltemperatur praktisch der Kupplungstemperatur entspricht. Gegenüber den Ausführungsformen, bei denen die Ausgangstemperatur direkt in der Kupplung gemessen wird, ergeben sich insb. in fertigungstechnischer Hinsicht erhebliche Vorteile. Die erfindungsgemäße Rückkopplungsanordnung 10 wird insb. verwendet für geschlossene oder offene Schleifensteuerungen für Anfahrkupplungen oder Doppelkupplungssysteme in Getrieben, wie z.B. Lastschaltgetriebe, wobei hier die erfindungsgemäße Rückkopplungsanordnung 10 bei der Steuerung der Kupplung während des Hoch- und Runterschaltens dient.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann insb. der allgemeine Aufbau der Rückkopplungsanordnung 10 bzw. der Kupplung 11 eine von den Figuren der Zeichnung abweichende Ausgestaltung aufweisen, wobei hier insb. auch eine abweichende Anbringung des die aktuelle Oberflächentemperatur ableitenden Temperatursensoren 13 vorgesehen ist. Weiterhin vorgesehen sind auch weitere Abwandlungen im Steueralgorithmus zur Ableitung der aktuellen Oberflächentemperatur.

## Patentansprüche

1. Rückkopplungsanordnung (10) für eine Kupplung (11), insbesondere für eine Ölbadscheibenkupplung, die insbesondere, für eine Verwendung als Anfahrkupplung oder als Schaltkupplung vorgesehen ist, mit einer Sensoranordnung zur Erfassung der Kupplungstemperatur der Kupplung (11), die eine Temperaturerfassungseinrichtung (12) aufweist, mit wenigstens einem im wesentlichen die Ausgangstemperatur des aus der Kupplung (11) gelangenden Öles messenden, die aktuelle Oberflächentemperatur der Kupplung (11) ableitenden Temperatursensoren (13),
**dadurch gekennzeichnet, daß**
der wenigstens eine, im wesentlichen die Ausgangstemperatur des aus der Kupplung (11) gelangenden Öles messende, die aktuelle Oberflächentemperatur ableitende Temperatursensor (13) im direkten, unmittelbaren, außerhalb der Kupplung (11) liegenden Ausgangsbereich der Kupplung (11) angeordnet ist.

2. Rückkopplungsanordnung nach Anspruch 1,
**dadurch gekennzeichnet, daß**
der wenigstens eine, im wesentlichen die Ausgangstemperatur des aus der Kupplung (11) gelangenden Öles messende, die aktuelle Oberflächentemperatur ableitende Temperatursensor (13) am unteren seitlichen Gehäusebereich (15) der Kupplung (11) in vertikaler Richtung liegend angeordnet ist.

3. Rückkopplungsanordnung nach Anspruch 1,
**dadurch gekennzeichnet, daß**
der wenigstens eine, im wesentlichen die Ausgangstemperatur des aus der Kupplung (11) gelangenden Öles messende, die aktuelle Oberflächentemperatur ableitende Temperatursensor (13) im direkten Bereich unterhalb der Kupplung (11) in horizontaler Richtung liegend und in vertikaler Richtung leicht versetzt in einer dafür vorgesehenen Ausnehmung (16) liegend angeordnet ist.

4. Rückkopplungsanordnung nach Anspruch 1,
**dadurch gekennzeichnet, daß**
der wenigstens eine, im wesentlichen die Ausgangstemperatur des aus der Kupplung (11) gelangenden Öles messende, die aktuelle Oberflächentemperatur ableitende Temperatursensor (13) im direkten Bereich unterhalb der Kupplung (11) in horizontaler Richtung liegend und in vertikaler leicht versetzt in einem mittig in einer dafür vorgesehenen Ausnehmung (16) liegenden kreisförmigen Einsatz (17), mittig in diesem Einsatz (17) liegend, angeordnet ist.

5. Rückkopplungsanordnung nach Anspruch 4,
**dadurch gekennzeichnet, daß**
der den wenigstens einen Temperatursensoren (13) aufnehmende, mittig in der Ausnehmung (16) liegende Einsatz (17) gleichmäßig über den Umfang verteilt, radial nach außen angeordnete Durchlaßöffnungen (18) aufweist.

6. Rückkopplungsanordnung nach einem der Ansprüche 1 bis 5,
**dadurch gekennzeichnet, daß**
die Rückkopplungsanordnung (10) derart ausgebildet ist,
- daß die Kupplungsausgangstemperatur zur genaueren Bestimmung der Kupplungseigenschaften, insbesondere des Reibungskoeffizienten in derem Schleifzustand, statischem Zustand oder unterbrochenem Zustand, dient, und zwar als Eingangsgröße für die Rückkopplungsanordnung (10),
- daß die Kupplungsausgangstemperatur zur Bestimmung von steigenden oder fallenden Hysterese- Abweichungen der Kupplung (11) in Bezug auf eine Standard- Hysterese- Funktion dient, und zwar als Eingangsgröße für die Rückkopplungsanordnung (10),
- daß die Kupplungsausgangstemperatur zur Auslösung sofortiger Schutzfunktionen zum Schutz der Kupplung (11) vor Überhitzung dient, wie insbesondere einer Begrenzung eines Schleifens, einem Öffnen oder Schließen der Kupplung (11) und/oder einem Auslösen einer zur Erhöhung eines Kühlflusses dienenden Betätigung.

7. Rückkopplungsanordnung nach Anspruch 6,
**dadurch gekennzeichnet, daß**
die Rückkopplungsanordnung (10) zur Erhöhung des Kühlflusses ein den Steuerfluß beeinflussendes Ventilsystem umfaßt.

8. Rückkopplungsanordnung nach Anspruch 7,
**dadurch gekennzeichnet, daß**
die Rückkopplungsanordnung (10) zur Betätigung des den Steuerfluß beeinflussenden Ventilsystems ein variables Magnetventil umfaßt.

9. Rückkopplungsanordnung nach Anspruch 7,
**dadurch gekennzeichnet, daß**
die Rückkopplungsanordnung (10) zur Betätigung des den Steuerfluß beeinflussenden Ventilsystemes eine PWM- Betätigungseinheit umfaßt.

10. Rückkopplungsanordnung nach einem der Ansprüche 1 bis 9,
**dadurch gekennzeichnet, daß**
die Rückkopplungsanordnung (10) einen Steueralgorithmus umfaßt, der zur Bestimmung von steigenden oder fallenden Hysterese- Zuständen der Kupplungseigenschaften auf Grundlage einer Magnet- Ventil - Hysterese-Kompensation dient.

11. Rückkopplungsanordnung nach einem der Ansprüche 1 bis 9,
**dadurch gekennzeichnet, daß**
die Rückkopplungsanordnung (10) einen Steueralgorithmus umfaßt, der zur Bestimmung von steigenden oder fallenden Hysterese- Zuständen von Kupplungseigenschaften auf Grundlage des durch einen Drucksensor gemessenen aktuellen Kupplungsdruckes dient.

12. Rückkopplungsanordnung nach Anspruch 6,
**dadurch gekennzeichnet, daß**
die Rückkopplungsanordnung (10) einen Steueralgorithmus umfaßt, der zur Ableitung der aktuellen Oberflächentemperatur der Kupplung (11) aus einem Wärme- Energie- Kalkulatons- Modell dient.

13. Rückkopplungsanordnung nach Anspruch 12,
**dadurch gekennzeichnet, daß**
das Wärme- Energie- Kalkulations- Modell für den Steueralgorithmus der Rückkopplungsanordnung (10) ein Durchflußraten- Kalkulations- Modell und ein Kupplungs- Energie- Kalkulations- Modell umfaßt.

## Claims

1. Feedback arrangement (10) for a clutch (11), in particular for an oil bath disc clutch which is provided in particular for use as a driving off clutch or a switching clutch, having a sensor arrangement for sensing the clutch temperature of the clutch (11), which arrangement has a temperature-sensing device (12) with at least one temperature sensor (13) which essentially measures the initial temperature of the oil leaving the clutch (11) and which derives the current surface temperature of the clutch (11), **characterized in that** the at least one temperature sensor (13) which essentially measures the inital temperature of the oil leaving the clutch (11) and which derives the current surface temperature is arranged in the direct output region of the clutch (11) which lies immediately outside the clutch.

2. Feedback arrangement according to Claim 1, **characterized in that** the at least one temperature sensor (13) which essentially measures the initial temperature of the oil leaving the clutch (11) and derives the current surface temperature is arranged at the lower lateral housing region (15) of the clutch (11) in the vertical direction.

3. Feedback arrangement according to Claim 1, **characterized in that** the at least one temperature sensor (13) which essentially measures the initial temperature of the oil leaving the clutch (11) and derives the current surface temperature is arranged in the direct region underneath the clutch (11) in the horizontal direction and slightly offset in the vertical direction, in a recess (16) which is provided for that purpose.

4. Feedback arrangement according to Claim 1, **characterized in that** the at least one temperature sensor (13) which essentially measures the initial temperature of the oil leaving the clutch (11) and derives the current surface temperature is arranged in the direct region underneath the clutch (11) in the horizontal direction and slightly offset in the vertical direction, in a circular insert (17) which is located in the middle of a recess (16) which is provided for that purpose, and said temperature sensor (13) is located in the middle of this insert (17).

5. Feedback arrangement according to Claim 4, **characterized in that** the insert (17) which holds the at least one temperature sensor (13) and is located in the middle of the recess (16) has through-openings (18) which are arranged distributed uniformly over the circumference, radially outwards.

6. Feedback arrangement according to one of Claims 1 to 5, **characterized in that** the feedback arrangement (10) is embodied in such a way
- that the initial temperature of the clutch is used to determine more precisely the properties of the clutch, in particular the coefficients of friction in their slipping state, static state or interrupted state, specifically as an input variable for the feedback arrangement (10),
- **in that** the initial temperature of the clutch is used to determine rising or falling hysteresis deviations of the clutch (11) from a standard hysteresis function, specifically as an input variable for the feedback arrangement (10),
- **in that** the initial temperature of the clutch is used to trigger immediate protective functions for protecting the clutch (11) from overheating such as, in particular, limitation of slipping, opening or closing of the clutch (11) and/or triggering of an actuation process which is used to increase a cooling flow.

7. Feedback arrangement according to Claim 6, **characterized in that**, in order to increase the cooling flow, the feedback arrangement (10) comprises a valve system which influences the control flow.

8. Feedback arrangement according to Claim 7, **characterized in that** the feedback arrangement (10) comprises a variable solenoid valve for activating the valve system which influences the control flow.

9. Feedback arrangement according to Claim 7, **characterized in that** the feedback arrangement (10) comprises a PWM activation unit for activating the valve system which influences the control flow.

10. Feedback arrangement according to one of Claims 1 to 9, **characterized in that** the feedback arrangement (10) comprises a control algorithm which is used to determine rising or falling hysteresis states of the clutching properties on the basis of compensation of a solenoid valve hysteresis.

11. Feedback arrangement according to one of Claims 1 to 9, **characterized in that** the feedback arrangement (10) comprises a control algorithm which is used to determine rising or falling hysteresis states of clutch properties on the basis of the current clutch pressure measured by a pressure sensor.

12. Feedback arrangement according to Claim 6, **characterized in that** the feedback arrangement (10) comprises a control algorithm which is used to derive the current surface temperature of the clutch (11) from a heat energy calculation model.

13. Feedback arrangement according to Claim 12, **characterized in that** the heat energy calculation model for the control algorithm of the feedback arrangement (10) comprises a through flow rate calculation model and a clutch energy calculation model.

## Revendications

1. Arrangement de rétroaction (10) pour un embrayage (11) notamment pour un embrayage à disque à bain d'huile qui est notamment prévu pour une utilisation en tant qu'embrayage de démarrage ou embrayage de changement de vitesse, comprenant un arrangement de capteur pour détecter la température de l'embrayage (11), lequel présente un dispositif de détection de la température (12), avec au moins un capteur de température (13) mesurant essentiellement la température de l'huile sortant de l'embrayage (11) et dérivant la température de surface actuelle de l'embrayage (11), **caractérisé en ce que** l'au moins un capteur de température (13) mesurant essentiellement la température de l'huile sortant de l'embrayage (11) et dérivant la température de surface actuelle est monté dans la zone de sortie directe de l'embrayage (11) qui se trouve immédiatement à l'extérieur de l'embrayage (11).

2. Arrangement de rétroaction selon la revendication 1, **caractérisé en ce que** l'au moins un capteur de température (13) mesurant essentiellement la température de l'huile sortant de l'embrayage (11) et dérivant la température de surface actuelle est monté sur la zone de boîtier (15) latérale inférieure de l'embrayage (11) posé en position verticale.

3. Arrangement de rétroaction selon la revendication 1, **caractérisé en ce que** l'au moins un capteur de température (13) mesurant essentiellement la température de l'huile sortant de l'embrayage (11) et dérivant la température de surface actuelle est monté dans la zone directe sous l'embrayage (11) posé en position horizontale et légèrement décalé dans le sens vertical dans un creux (16) prévu à cet effet.

4. Arrangement de rétroaction selon la revendication 1, **caractérisé en ce que** l'au moins un capteur de température (13) mesurant essentiellement la température de l'huile sortant de l'embrayage (11) et dérivant la température de surface actuelle est monté dans la zone directe sous l'embrayage (11) posé en position horizontale et légèrement décalé dans le sens vertical dans un insert circulaire (17) reposant au centre d'un creux (16) prévu à cet effet, posé au centre de cet insert (17).

5. Arrangement de rétroaction selon la revendication 4, **caractérisé en ce que** l'insert (17) recevant l'au moins un capteur de température (13) et posé au centre du creux (16) présente des orifices de passage (18) distribués régulièrement sur le pourtour et disposés dans le sens radial vers l'extérieur.

6. Arrangement de rétroaction selon l'une des revendications 1 à 5, **caractérisé en ce que** l'arrangement de rétroaction (10) est configuré de telle sorte
- que la température de sortie de l'embrayage sert à déterminer plus précisément les propriétés d'embrayage, notamment le coefficient de friction dans son état de friction, son état statique ou son état interrompu, et ce en tant que grandeur d'entrée pour l'arrangement de rétroaction (10),
- que la température de sortie de l'embrayage sert à déterminer les écarts d'hystérésis de l'embrayage (11) en rapport avec une fonction d'hystérésis standard, et ce en tant que grandeur d'entrée pour l'arrangement de rétroaction (10),
- que la température de sortie de l'embrayage sert à déclencher des fonctions de protection immédiates destinées à protéger l'embrayage (11) contre un échauffement excessif, comme notamment une limitation d'une friction, une ouverture ou une fermeture de l'embrayage (11) et/ou un déclenchement d'une manoeuvre destinée à augmenter un flux de refroidissement.

7. Arrangement de rétroaction selon la revendication 6, **caractérisé en ce que** l'arrangement de rétroaction (10) comprend un système de vannes qui influence le flux de commande pour augmenter le flux de refroidissement.

8. Arrangement de rétroaction selon la revendication 7, **caractérisé en ce que** l'arrangement de rétroaction (10) comprend une électrovanne variable pour actionner le système de vannes qui influence le flux de commande.

9. Arrangement de rétroaction selon la revendication 7, **caractérisé en ce que** l'arrangement de rétroaction (10) comprend une unité d'actionnement PWM pour actionner le système de vannes qui influence le flux de commande.

10. Arrangement de rétroaction selon l'une des revendications 1 à 9, **caractérisé en ce que** l'arrangement de rétroaction (10) comprend un algorithme de commande qui sert à déterminer des états d'hystérésis croissants ou décroissants des propriétés d'embrayage sur la base d'une compensation de l'hystérésis de l'électrovanne.

11. Arrangement de rétroaction selon l'une des revendications 1 à 9, **caractérisé en ce que** l'arrangement de rétroaction (10) comprend un algorithme de commande qui sert à déterminer des états d'hystérésis croissants ou décroissants des propriétés d'embrayage sur la base de la pression d'embrayage actuelle mesurée par un capteur de pression.

12. Arrangement de rétroaction selon la revendication 6, **caractérisé en ce que** l'arrangement de rétroaction (10) comprend un algorithme de commande qui sert à dériver la température de surface actuelle de l'embrayage (11) à partir d'un modèle de calcul de l'énergie thermique.

13. Arrangement de rétroaction selon la revendication 12, **caractérisé en ce que** le modèle de calcul de l'énergie thermique pour l'algorithme de commande de l'arrangement de rétroaction (10) comprend un modèle de calcul des débits et un modèle de calcul de l'énergie d'embrayage.
